# EUROPÄISCHE PATENTSCHRIFT

(11) **EP 2 805 805 B1**
(45) Veröffentlichungstag und Bekanntmachung des Hinweises auf die Patenterteilung: **27.02.2019**
(21) Anmeldenummer: 13168549.7
(22) Anmeldetag: 21.05.2013
(51) Int. Cl.: B29C 47/08, B29C 47/60, B29C 47/40, B30B 11/24, B29B 7/48

(54) **Mehrwellen-Schneckenmaschine zur Aufbereitung von Materialien, insbesondere von Kunststoffmaterialien**
Multiple shaft machine for the treatment of materials, in particular plastic materials
Machine à vis sans fin à plusieurs arbres pour la préparation de matériaux, notamment de matériaux en matière synthétique

(43) Veröffentlichungstag der Anmeldung: 26.11.2014
(73) Patentinhaber: Coperion GmbH, 70469 Stuttgart (DE)
(72) Erfinder: Munkes, Peter, 70439 Stuttgart (DE); Schleicher, Raimund, 71672 Marbach (DE); Koberg, Carsten, 71332 Waiblingen (DE); Kyrion, Dirk, 75447 Sternenfels (DE)
(74) Vertreter: Rau, Schneck & Hübner Patentanwälte Rechtsanwälte PartGmbB

(56) Entgegenhaltungen:
- DE-A1- 3 940 954
- DE-A1-102006 029 471
- DE-U1-202007 008 072
- FR-A1- 2 472 970
- JP-A- S5 881 146
- JP-A- H08 309 827
- JP-A- 2011 245 721
- US-A- 3 305 894
- US-A- 4 447 156
- US-A1- 2009 258 100

## Beschreibung

Die Erfindung betrifft eine Mehrwellen-Schneckenmaschine zur Aufbereitung von Materialen, insbesondere von Kunststoffmaterialen, gemäß dem Oberbegriff des Anspruchs 1.

Aus der DE 44 21 514 A1 (entspricht US 5,797,677 A) ist eine Schneckenmaschine zur Kunststoffaufbereitung bekannt, die zwei gleichsinnig drehantreibbare Behandlungselementwellen aufweist. Die Behandlungselementwellen sind modular aufgebaut und weisen jeweils eine Welle auf, auf der in einer frei wählbaren Reihenfolge nacheinander verschiedene Behandlungselemente angeordnet sind. Die Behandlungselemente sind mittels Passfedern drehfest an der zugehörigen Welle angeordnet, so dass eine zuverlässige Drehmomentübertragung möglich ist. Dadurch, dass die Behandlungselemente in einer frei wählbaren Reihenfolge auf den Wellen angeordnet werden können, sind mittels der Behandlungselementwellen in einfacher Weise unterschiedlichste Funktionen, wie beispielsweise Fördern, Plastifizieren, Homogenisieren und Druckaufbauen realisierbar. Die Herstellung der Behandlungselementwellen ist jedoch aufwendig und verursacht erhebliche Kosten.

Die US 3 305 894 A1 offenbart eine Schneckenmaschine, deren Wellen im Bereich des Masseeinzugs zweigeteilt sind. Hierdurch können die dem Masseeinzug dienenden Schneckenteile einfach ausgewechselt werden.

Die DE 39 40 954 A1 offenbart einen Einschnecken-Extruder, dessen Plastifizierschnecke in einem Förderschnecken-Abschnitt eine aus Teil-Wellen zusammengesetzte Welle aufweist.

Aus der JP 2011 245721 A ist ein Doppelschneckenextruder mit einer Entgasungsvorrichtung bekannt, die eine Entgasungsschnecke aufweist. Die Entgasungsschnecke ist aus mehreren Schneckenelementen zusammengesetzt, die als Vollzylinder ausgebildet sind und stirnseitig jeweils einen Gewindezapfen und eine Gewindebohrung aufweisen, sodass diese miteinander zu der Entgasungsschnecke verschraubt werden können.

Die JP 08 309827 A offenbart einen Extruder mit einer Welle, auf der mehrere Behandlungselemente angeordnet sind. Zwischen einem Flansch und dem ersten Behandlungselement ist ein Federelement zum Verspannen der Behandlungselemente angeordnet.

Die US 2009/0258100 A1 offenbart einen Extruder mit einer Schneckenwelle, die an einem stromabwärtigen Ende mittels eines Federelements gelagert ist.

Aus der DE 10 2006 029 471 A1 ist ein Doppelschnecken-Extruder mit Schneckenwellen und darauf angeordneten Schneckensegmenten bekannt. Die Schneckensegmente sind in beiden Endabschnitten mit Keilnuten versehen, wohingegen mittlere Abschnitte ohne Keilnuten ausgebildet sind. Die mittleren Abschnitte dienen als Entlastungsabschnitte.

Der Erfindung liegt die Aufgabe zugrunde, eine Mehrwellen-Schneckenmaschine zu schaffen, die einen modularen Aufbau sowie eine Übertragung von hohen Drehmomenten bei vergleichsweise geringeren Herstellungskosten ermöglicht.

Diese Aufgabe wird durch eine Mehrwellen-Schneckenmaschine mit den Merkmalen des Anspruchs 1 gelöst. Dadurch, dass die mindestens zwei Wellen im Gegensatz zum Stand der Technik nicht einteilig ausgebildet sind, sondern aus mehreren Teil-Wellen zusammengesetzt sind, sind auch die Wellen modular aufgebaut, wodurch die Herstellungskosten der Behandlungselementwellen reduziert werden können. Die mindestens zwei Wellen sind vorzugsweise jeweils aus mindestens zwei Teil-Wellen, insbesondere aus mindestens drei Teil-Wellen zusammengesetzt. Vorzugsweise sind die mindestens zwei Wellen in gleicher Weise aus den Teil-Wellen zusammengesetzt. An den Verbindungsstellen der Teil-Wellen ist die Drehmomentübertragungsfähigkeit der Wellen im Vergleich zu einer einstückigen Ausbildung beeinträchtigt. Diese Beeinträchtigung wird jedoch im Wesentlichen dadurch kompensiert, dass ein Behandlungselement an der jeweiligen Verbindungsstelle drehfest und übergreifend auf den beiden verbundenen Teil-Wellen angeordnet ist. Das jeweilige Behandlungselement kann beispielsweise als Schneckenelement oder als Knetelement ausgebildet sein. Hierzu ist das Knetelement als sogenannter Knetblock ausgebildet, der mehrere einstückig miteinander verbundene Knetscheiben umfasst.

Dadurch, dass die ersten Teil-Wellen sich jeweils mindestens bis in eine Aufschmelzzone erstrecken und mindestens ein Knetelement drehfest auf jeder der ersten Teil-Wellen angeordnet ist, wird eine zuverlässige Drehmomentübertragung bei reduzierten Herstellungskosten gewährleistet. Der größte Teil der den Behandlungselementwellen zugeführten mechanischen Energie wird in dem jeweiligen ersten Knetelement umgesetzt, also in das aufzubereitende Material eingeleitet. Das bedeutet, dass im Bereich der ersten Knetelemente die höchsten Drehmomente auftreten. Dadurch, dass die ersten Knetelemente jeweils auf der ersten Teil-Welle vollständig angeordnet sind, treten die höchsten Drehmomente nicht im Bereich der Verbindungsstellen oder nach den Verbindungsstellen auf, wodurch die Drehmomentübertragung äußerst zuverlässig erfolgt. Hierdurch können Wellenbrüche an den Verbindungsstellen wirkungsvoll vermieden werden.

Die auf den Wellen angeordneten Behandlungselemente sind in üblicherweise am stromaufwärtigen und am stromabwärtigen Ende durch Anschläge in Richtung der Drehachsen fixiert. Am stromaufwärtigen Ende erfolgt dies beispielsweise mittels eines Gehäuseabschlusselements, wohingegen die Fixierung am stromabwärtigen Ende beispielsweise mittels Wellenspitzen bzw. Schneckenspitzen erfolgt. Die Wellenspitzen sind an den jeweils letzten Teil-Wellen befestigbar.

Bei der erfindungsgemäßen Mehrwellen-Schneckenmaschine können die Herstellungskosten insbesondere dann reduziert werden, wenn die Wellen vergleichsweise lang sind und/oder einen vergleichsweise großen Durchmesser aufweisen. Die Teil-Wellen sind im Vergleich zu einstückigen Wellen einfach und ohne den Einsatz von Spezialmaschinen herstell- bzw. bearbeitbar. Darüber hinaus können die Teil-Wellen je nach Bedarf hergestellt bzw. bearbeitet werden, wodurch die Herstellung der Wellen optimiert wird.

Durch die Zusammensetzung der Wellen aus mehreren Teil-Wellen können somit in einfacher Weise Wellen modular aufgebaut und mit Behandlungselementen bestückt werden. Dadurch, dass an den Verbindungsstellen jeweilige Behandlungselemente übergreifend auf den Teil-Wellen angeordnet sind, wird die Drehmomentübertragungsfähigkeit der Wellen bzw. der Behandlungselementwellen im Wesentlichen nicht beeinträchtigt. Insgesamt können hierdurch die Herstellungskosten reduziert werden.

Eine Mehrwellen-Schneckenmaschine nach Anspruch 2 gewährleistet einerseits eine einfache Herstellung der Behandlungselementwellen und andererseits eine zuverlässige Drehmomentübertragung zwischen den Teil-Wellen und dem übergreifend auf den Teil-Wellen angeordneten Behandlungselement. Dadurch, dass die Außenprofile der Teil-Wellen im verbundenen Zustand zueinander fluchtend ausgerichtet sind, können die Behandlungselemente bei der Herstellung in einfacher Weise über die Verbindungsstelle geschoben werden. Weiterhin können die Behandlungselemente im Wesentlichen spielfrei auf den zugehörigen Teil-Wellen angeordnet werden, wodurch insbesondere bei dem übergreifend angeordneten Behandlungselement eine sichere und zuverlässige Drehmomentübertragung erzielt wird.

Eine Mehrwellen-Schneckenmaschine nach Anspruch 3 gewährleistet eine hohe Drehmomentübertragungsfähigkeit. Die Herstellung einer Evolventenverzahnung ist aufwendig, was insbesondere für vergleichsweise lange Wellen gilt. Durch die Zusammensetzung der Wellen aus mehreren Teil-Wellen kann die Herstellung von Evolventenverzahnungen erheblich vereinfacht werden.

Eine Mehrwellen-Schneckenmaschine nach Anspruch 4 gewährleistet reduzierte Herstellungskosten. Die Teil-Wellen können je nach Bedarf hinsichtlich Material, Materialbearbeitung und/oder Länge an die Aufbereitungsaufgabe angepasst und optimiert werden.

Eine Mehrwellen-Schneckenmaschine nach Anspruch 5 gewährleistet eine einfache und zuverlässige Verbindung der Teil-Wellen. Die Schraubverbindung ermöglicht ein einfaches Verschrauben der zu verbindenden Teil-Wellen. Hierzu weist eine der Teil-Wellen vorzugsweise einen konzentrisch zu der Drehachse angeordneten Verbindungszapfen mit einem Außengewinde auf. Die mit dieser Teil-Welle zu verbindende Teil-Welle weist eine dem Verbindungszapfen entsprechende Verbindungsbohrung mit einem Innengewinde auf, so dass der Verbindungszapfen in einfacher Weise in die Verbindungsbohrung einschraubbar ist. Vorzugweise sind das Außengewinde des Verbindungszapfens sowie das Innengewinde der zugehörigen Verbindungsbohrung so ausgebildet, dass eine Drehmomentübertragung im Betrieb der Mehrwellen-Schneckenmaschine zu einer Festigung der Schraubverbindung führt. Hierdurch wird vermieden, dass sich die Schraubverbindung bei geringem Spiel zwischen den Außenprofilen der Teil-Wellen und dem Innenprofil des übergreifend angeordneten Behandlungselements lockert. Vorzugsweise ist die jeweilige Welle im Wesentlichen spaltfrei ausgebildet. Ein etwaiger Spalt zwischen den verbundenen Teil-Wellen bzw. einer Teil-Welle und einer zwischen den Teil-Wellen angeordneten ringförmigen Scheibe beträgt höchstens 2 mm, insbesondere höchstens 1,5 mm, insbesondere höchstens 1 mm, und insbesondere höchstens 0,5 mm in Richtung der jeweiligen Drehachse. Durch die Schraubverbindung sowie die im Wesentlichen spaltfreie Ausbildung wird eine zuverlässige Drehmomentübertragung gewährleistet.

Vorzugsweise werden die Teil-Wellen - wenn zwischen diesen keine ringförmige Scheibe angeordnet ist - so miteinander verschraubt, dass diese an ihren einander zugewandten Stirnseiten spaltfrei gegeneinander anliegen. Bei der Montage der Behandlungselemente kann in Abhängigkeit einer Vorspann-Kraft, mit der die Behandlungselemente auf der jeweiligen Welle montiert werden, ein geringer Spalt entstehen, da die Welle durch die Vorspann-Kraft auf Zug belastet wird. Dieser Spalt verändert sich in einem erwärmten Betriebszustand der jeweiligen Welle im Wesentlichen nicht.

Ist demgegenüber zwischen den Teil-Wellen eine ringförmige Scheibe angeordnet, so werden die Teil-Wellen vorzugsweise derart miteinander verschraubt, dass die Teil-Wellen mit ihren einander zugewandten Stirnseiten spaltfrei gegen die Scheibe anliegen. Bei der Montage der Behandlungselemente kann in Abhängigkeit der Vorspann-Kraft ein geringer Spalt zwischen der Scheibe und einer der benachbarten Teil-Wellen bzw. den Teil-Wellen entstehen. Dadurch, dass der Wärmeausdehnungskoeffizient der Scheibe vorzugsweise größer als der Wärmeausdehnungskoeffizient mindestens einer der benachbarten Teil-Wellen ist, schließt sich dieser Spalt in einem erwärmten Betriebszustand der jeweiligen Welle wieder. Im erwärmten Betriebszustand weist die Welle vorzugsweise eine Temperatur von mindestens 100°C, insbesondere von mindestens 150°C und insbesondere von mindestens 200°C auf. Im erwärmten Betriebszustand ist die Welle somit spaltfrei.

Eine Mehrwellen-Schneckenmaschine nach Anspruch 6 gewährleistet eine hohe Zuverlässigkeit der Behandlungselementwellen im Betrieb. Dadurch, dass die Behandlungselemente mit einer Vorspann-Kraft auf den Wellen angeordnet sind, werden die Behandlungselemente in Richtung der jeweiligen Drehachse stirnseitig gegeneinander gepresst und die zugehörige Welle mit der Vorspann-Kraft auf Zug belastet. Im Betrieb der Mehrwellen-Schneckenmaschine erwärmen sich die Wellen, was zu einer axialen Ausdehnung der Wellen führt. Dadurch, dass die Behandlungselemente mit einer Vorspann-Kraft auf den Wellen angeordnet sind, wird ein axiales Spiel der Behandlungselemente zwischen den endseitigen Fixierungen vermieden. Die Behandlungselemente sind somit auch in einem erwärmten Betriebszustand der Wellen sicher auf diesen angeordnet.

Eine Mehrwellen-Schneckenmaschine nach Anspruch 7 gewährleistet eine zuverlässige Drehmomentübertragung bei geringen Herstellungskosten. Der größte Teil der den Behandlungselementwellen zugeführten mechanischen Energie wird bei der Kunststoffaufbereitung in der Aufschmelzzone umgesetzt, also in das aufzubereitende Kunststoffmaterial eingebracht. In der Aufschmelzzone treten dementsprechend die höchsten Drehmomente auf. Dadurch, dass die ersten Teil-Wellen vergleichweise länger als die daran anschließenden zweiten Teil-Wellen ausgebildet sind, liegt die Aufschmelzzone vollständig im Bereich der ersten Teil-Wellen. Hierdurch treten die höchsten Drehmomente nicht im Bereich der Verbindungsstellen bzw. nach den Verbindungsstellen auf. Wellenbrüche an den Verbindungsstellen können somit wirkungsvoll vermieden werden. Sind die Wellen aus mindestens drei Teil-Wellen zusammengesetzt, so weisen die dritten Teil-Wellen und ggf. weitere nachfolgende Teil-Wellen vorzugsweise eine einheitliche Länge auf, die der Länge der zweiten Teil-Wellen entspricht. Hierdurch können die Wellen in einfacher Weise mit einer geringen Anzahl an unterschiedlichen Teil-Wellen aufgebaut werden, wodurch die Herstellungskosten reduziert werden.

Eine Mehrwellen-Schneckenmaschine nach Anspruch 8 gewährleitstet vergleichsweise niedrige Herstellungskosten bei Wellen mit einer großen Gesamtlänge.

Eine Mehrwellen-Schneckenmaschine nach Anspruch 9 gewährleistet vergleichweise niedrige Herstellungskosten bei Wellen mit einem großen Wellen-Durchmesser. Der Durchmesser der Gehäusebohrungen ergibt sich aus dem Außendurchmesser der Behandlungselemente. Bei Behandlungselementen mit großem Außendurchmesser wird auch der Wellen-Durchmesser entsprechend groß gewählt. Durch die Aufteilung in Teil-Wellen wird die Herstellung bei großen Wellen-Durchmessern vereinfacht.

Eine Mehrwellen-Schneckenmaschine nach Anspruch 10 gewährleistet auf einfache Weise eine zuverlässige Drehmomentübertragung. In Abhängigkeit der Vorspann-Kraft, mit der die Behandlungselemente auf der zugehörigen Welle montiert sind, kann zwischen der Scheibe und einer der benachbarten Teil-Wellen bzw. den benachbarten Teil-Wellen ein geringer Spalt entstehen, da die Welle aufgrund der Vorspann-Kraft auf Zug belastet ist. Dadurch, dass der Wärmeausdehnungskoeffizient α_{S} der Scheiben größer als der Wärmeausdehnungskoeffizient αᵢ der benachbarten Teil-Welle i bzw. Teil-Wellen ist, dehnen sich die Scheiben bei einer Erwärmung der Wellen im Betrieb in Richtung der Drehachse stärker aus als sich der Spalt vergrößert. In einem erwärmten Betriebszustand ist die jeweilige Welle somit spaltfrei, da die Teil-Wellen mit ihren Stirnseiten gegen die dazwischen angeordnete Scheibe anliegen. Hierdurch wird eine hohe Stabilität und Drehmomentübertragungsfähigkeit der jeweiligen Welle gewährleistet. Vorzugsweise ist der Wärmeausdehnungskoeffizient α_{S} der Scheibe größer als die Wärmeausdehnungskoeffizienten αᵢ der beiden benachbarten Teil-Wellen i. Der Wärmeausdehnungskoeffizient αᵢ bezeichnet den Wärmeausdehnungskoeffizienten der i-ten Teil-Welle. Allgemein gilt für den Laufindex i = 1, 2,...n, wobei n die letzte Teil-Welle bezeichnet. Bei zwei Teil-Wellen gilt somit i = 1, 2 wohingegen bei drei Teil-Wellen gilt i = 1, 2, 3. Sind zur Ausbildung einer Welle mehr als zwei Teil-Wellen vorgesehen, so können die dazwischen angeordneten Scheiben identisch oder unterschiedlich ausgebildet sein. Einander entsprechende Scheiben der Wellen sind identisch ausgebildet. Dadurch, dass die Teil-Wellen an der dazwischen angeordneten Scheibe anliegen, ist die Welle spaltfrei ausgebildet.

Eine Mehrwellen-Schneckenmaschine nach Anspruch 11 gewährleistet eine zuverlässige Drehmomentübertragung. Vorzugsweise gilt das Verhältnis in Bezug auf die Wärmeausdehnungskoeffizienten αᵢ beider benachbarten Teil-Wellen i.

Eine Mehrwellen-Schneckenmaschine nach Anspruch 12 gewährleistet eine zuverlässige Drehmomentübertragung. Durch die axiale Abmessung L_{S} der jeweiligen Scheibe wird einerseits gewährleistet, dass aufgrund des Wärmeausdehnungskoeffizienten α_{S} bei einer Erwärmung eine ausreichende axiale Ausdehnung infolge der axialen Abmessung L_{S} bzw. Dicke der Scheibe erzielt wird. Andererseits wird gewährleistet, dass die axiale Abmessung L_{S} bzw. Dicke der Scheibe die Teil-Wellen nicht zu weit voneinander beabstandet, sodass die Drehmomentübertragungsfähigkeit an der Verbindungsstelle im Wesentlichen nicht beeinträchtig wird.

Eine Mehrwellen-Schneckenmaschine nach Anspruch 13 gewährleistet eine zuverlässige Drehmomentübertragung. Als Material für die jeweilige Scheibe eignet sich beispielsweise Manganstahl.

Eine Mehrwellen-Schneckenmaschine nach Anspruch 14 gewährleistet eine zuverlässige Drehmomentübertragung. Dadurch, dass die jeweilige Scheibe ein Scheiben-Außenprofil aufweist das den Außenprofilen der benachbarten Teil-Wellen entspricht, leistet auch die Scheibe einen Beitrag zur Drehmomentübertragung. Die Drehmomentübertragungsfähigkeit der Welle wird somit verbessert.

Weitere Merkmale, Vorteile und Einzelheiten der Erfindung ergeben sich aus der nachfolgenden Beschreibung mehrerer Ausführungsbeispiele. Es zeigen:
- Fig. 1: eine teilweise geschnitten dargestellte Mehrwellen-Schneckenmaschine zur Aufbereitung von Kunststoffmaterialien gemäß einem ersten Ausführungsbeispiel,
- Fig. 2: eine teilweise geschnittene Draufsicht auf die Mehrwellen-Schneckenmaschine in Fig. 2,
- Fig. 3: einen Querschnitt durch die Mehrwellen-Schneckenmaschine und deren Behandlungselementwellen entlang der Schnittlinie III-III in Fig. 2,
- Fig. 4: eine im Bereich einer Verbindungsstelle von zwei Teil-Wellen teilweise axial geschnitten dargestellte Behandlungselementwelle der Mehrwellen-Schneckenmaschine in Fig. 1,
- Fig. 5: eine teilweise geschnittene Draufsicht auf eine Mehrwellen-Schneckenmaschine gemäß einem zweiten Ausführungsbeispiel,
- Fig. 6: eine im Bereich der Verbindungsstellen von Teil-Wellen teilweise axial geschnitten dargestellte Behandlungselementwelle der Mehrwellen-Schneckenmaschine in Fig. 5,
- Fig. 7: eine im Bereich einer Verbindungsstelle von Teil-Wellen teilweise axial geschnitten dargestellte Behandlungselementwelle einer Mehrwellen-Schneckenmaschine gemäß einem dritten Ausführungsbeispiel, und
- Fig. 8: eine im Bereich einer Verbindungsstelle von Teil-Wellen teilweise axial geschnitten dargestellte Behandlungselementwelle einer Mehrwellen-Schneckenmaschine gemäß einem vierten Ausführungsbeispiel.

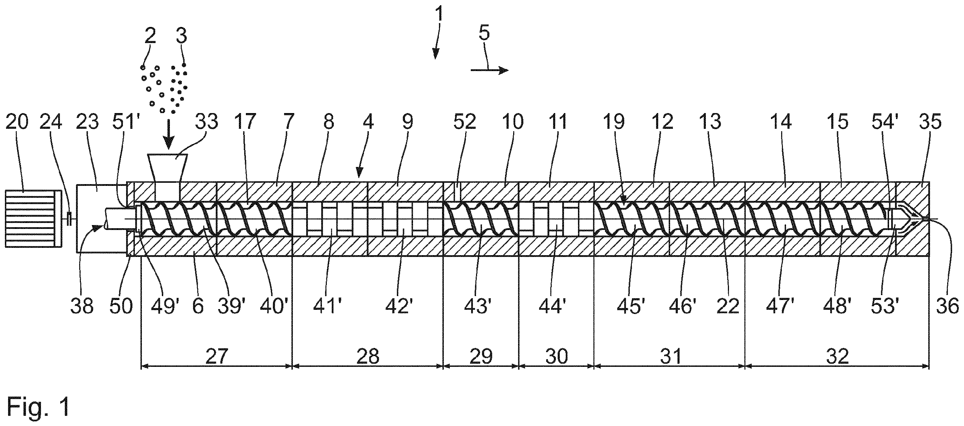

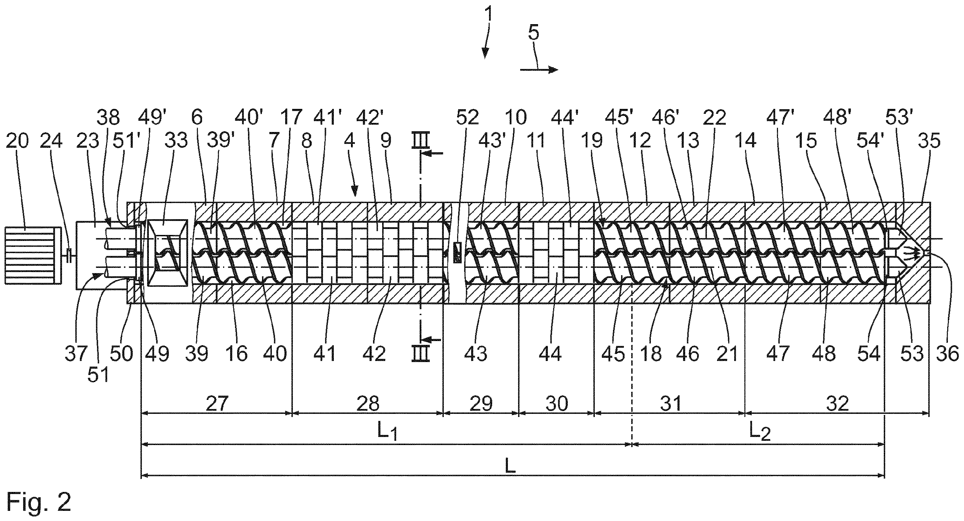

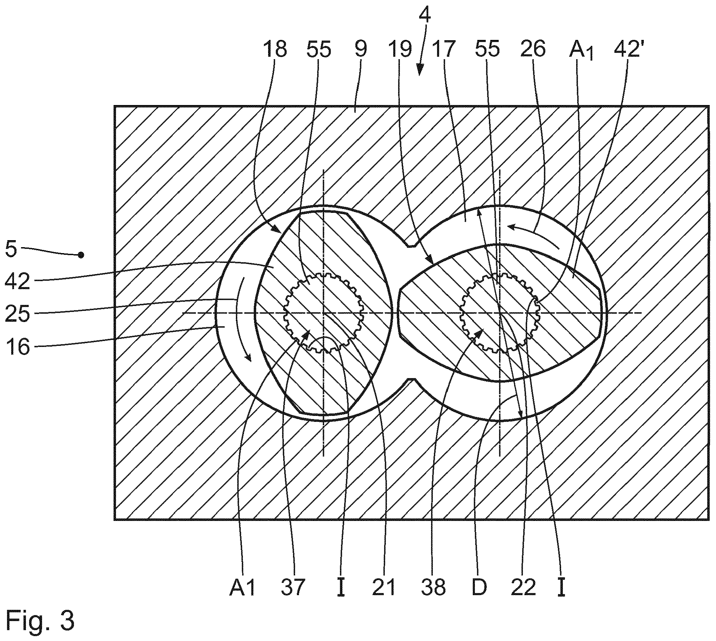

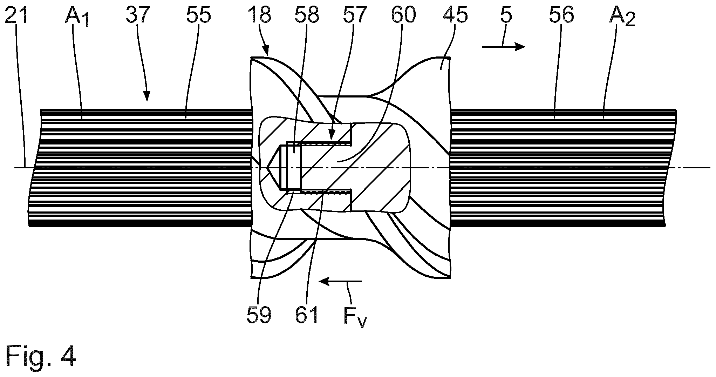

Nachfolgend ist anhand der Figuren 1 bis 4 ein erstes Ausführungsbeispiel der Erfindung beschrieben. Eine Mehrwellen-Schneckenmaschine 1 dient zur Aufbereitung eines Kunststoffmaterials 2, das mit Additiven 3 versehen ist. Die Schneckenmaschine 1 weist ein Gehäuse 4 aus mehreren in einer Förderrichtung 5 nacheinander angeordneten und als Gehäuseschüssen bezeichneten Gehäuseabschnitten 6 bis 15 auf. Die Gehäuseabschnitte 6 bis 15 sind über nicht näher dargestellte Flansche miteinander verbunden und bilden das Gehäuse 4 aus.

In dem Gehäuse 4 sind zwei zueinander parallele und einander durchdringende Gehäusebohrungen 16, 17 ausgebildet, die im Querschnitt die Form einer liegenden Acht haben. In den Gehäusebohrungen 16, 17 sind konzentrisch zwei Behandlungselementwellen 18, 19 angeordnet, die von einem Antriebsmotor 20 um zugehörige Drehachsen 21, 22 drehantreibbar sind. Zwischen den Behandlungselementwellen 18, 19 und dem Antriebsmotor 20 ist ein Verzweigungsgetriebe 23 angeordnet, wobei wiederum zwischen dem Antriebsmotor 20 und dem Verzweigungsgetriebe 23 eine Kupplung 24 angeordnet ist. Die Behandlungselementwellen 18, 19 werden gleichsinnig, also in gleichen Drehrichtungen 25, 26 um die Drehachsen 21, 22 angetrieben.

Auf dem den Verzweigungsgetriebe 23 benachbarten ersten Gehäuseabschnitt 6 ist eine Materialzuführung 33 in Form eines Trichters angeordnet, durch den das aufzubereitende Kunststoffmaterial 2 und ggf. Additive 3 in die Gehäusebohrungen 16, 17 einführbar sind.

Die Schneckenmaschine 1 weist in der Förderrichtung 5 nacheinander eine Einzugszone 27, eine Aufschmelzzone 28, eine Entgasungszone 29, eine Homogenisierzone 30, eine Förderzone 31 und eine Druckaufbauzone 32 auf. Das Gehäuse 4 ist an dem letzten Gehäuseabschnitt 15 durch eine Adapterplatte 35 abgeschlossen, die eine Austragsöffnung 36 aufweist.

Die Behandlungselementwellen 18, 19 sind durch Wellen 37, 38 und darauf angeordneten Behandlungselementen 39 bis 48 bzw. 39' bis 48' gebildet. Die auf der ersten Welle 37 angeordneten Behandlungselemente 39 bis 48 und die auf der zweiten Welle 38 angeordneten Behandlungselemente 39' bis 48' entsprechen einander, wobei die Bezugszeichen der auf der zweiten Welle 38 angeordneten Behandlungselemente 39' bis 48' zur Unterscheidung ein ' aufweisen. Die Behandlungselemente 39 bis 48 und 39' bis 48' weisen in dem Ausführungsbeispiel gemäß den Fig. 1 bis 4 jeweils eine Länge auf, die der Länge des zugehörigen Gehäuseabschnitts 6 bis 15 entspricht. In der Einzugszone 27 sind die Behandlungselemente als Schneckenelemente 39 bis 40' ausgebildet. Die Schneckenelemente 39, 39' und 40, 40' sind benachbart auf den Wellen 37, 38 angeordnet und greifen ineinander, sind also paarweise dichtkämmend ausgebildet. Zur Fixierung der Schneckenelemente 39, 39' in Richtung der Drehachsen 21, 22 ist an einem stromaufwärtigen Ende der Wellen 37, 38 ein jeweiliger erster Anschlag 49, 49' ausgebildet. Gegen den die Schneckenelemente 39 bzw. 39' anliegen. Der erste Gehäuseabschnitt 6 ist zu dem Verzweigungsgetriebe 23 hin durch eine Abschlussplatte 50 abgeschlossen, die zwei Durchführungsbohrungen 51, 51' aufweist. Die Wellen 37, 38 sind endseitig durch die Durchführungsbohrungen 51, 51' geführt und mit dem Verzweigungsgetriebe 23 gekoppelt.

In der Aufschmelzzone 28 sind erste Knetelemente 41, 41' und zweite Knetelemente 42, 42' als Behandlungselemente auf den Wellen 37, 38 angeordnet. Die Knetelemente 41, 41' und 42, 42' sind ebenfalls paarweise dichtkämmend ausgebildet. Jedes der Knetelemente 41 bis 42' ist einstückig ausgebildet. Die Knetelemente 41 bis 42' weisen jeweils fünf Knetscheiben auf, die winkelversetzt zueinander angeordnet sind.

In der Entgasungszone 29 sind einander dichtkämmende Schneckenelemente 43, 43' auf den Wellen 37, 38 angeordnet. Die Schneckenelemente 43, 43' sind entsprechend den Schneckenelementen 39 bis 40' jeweils einstückig ausgebildet. Der zugehörige Gehäuseabschnitt 10 weist zur Entgasung eine Entgasungsöffnung 52 auf.

In der nachgeordneten Homogenisierzone 30 sind auf den Wellen 37, 38 einstückig und einander dichtkämmend ausgebildete Knetelemente 44, 44' angeordnet. Die Knetelemente 44, 44' sind wiederum aus winkelversetzt zueinander angeordneten Knetscheiben ausgebildet.

Weiterhin sind in der nachgeordneten Förderzone 31 einstückig und einander dichtkämmend ausgebildete Schneckenelemente 45, 45' und 46, 46' auf den Wellen 37, 38 angeordnet. Entsprechend sind auf der nachfolgenden Druckaufbauzone 32 Schneckenelemente 47, 47' und 48, 48' auf den Wellen 37, 38 angeordnet.

Die Behandlungselemente 39 bis 48' sind in üblicher Weise auf den Wellen 37, 38 durch Wellenspitzen bzw. Schneckenspitzen 53, 53' fixiert. Die Wellenspitzen 53, 53' sind endseitig mit den Wellen 37, 38 durch eine jeweilige Schraubverbindung verbindbar, so dass die Wellenspitzen 53, 53' einen jeweiligen zweiten Anschlag 54, 54' ausbilden, gegen den die Schneckenelemente 48, 48' anliegen. Durch die Anschläge 49, 49' und 54, 54' sind die Behandlungselemente 39 bis 48 bzw. 39' bis 48' in axialer Richtung auf den Wellen 37, 38 fixiert.

Die Wellen 37, 38 sind identisch ausgebildet, so dass nachfolgend lediglich die Welle 37 beschrieben ist. Die Welle 37 weist eine erste Teil-Welle 55 und eine in der Förderrichtung 5 nachgeordnete zweite Teil-Welle 56 auf, die mittels einer Schraubverbindung 57 miteinander verbunden sind. Die erste Teil-Welle 55 weist ausgehend von dem ersten Anschlag 49 eine axiale Länge L₁ auf, wohingegen die zweite Teil-Welle 56 bis zu dem zweiten Anschlag 54 eine axiale Länge L₂ aufweist. Die Summe der Längen L₁ und L₂ ergibt eine Gesamtlänge L der Welle 37. Die Gesamtlänge L beträgt beispielsweise 10,0 m.

Die erste Teil-Welle 55 weist eine Länge L₁ derart auf, dass sich diese bis in die Förderzone 31 erstreckt und im Bereich des Schneckenelements 45 endet. Das Schneckenelement 45 ist somit drehfest und übergreifend auf beiden Teil-Wellen 55, 56 angeordnet. Zur übergreifenden Anordnung des Schneckenelements 45 weist die erste Teil-Welle 55 ein erstes Außenprofil A₁ und die zweite Teil-Welle 56 ein entsprechend ausgebildetes zweites Außenprofil A₂ auf, die im verbundenen Zustand der Teil-Wellen 55, 56 derart zueinander ausgerichtet sind, dass das Schneckenelement 45 mit einem entsprechend zu den Außenprofilen A₁ und A₂ ausgebildeten Innenprofil I drehfest auf beiden Außenprofilen A₁ und A₂ angeordnet ist. Die Außenprofile A₁ und A₂ sind also miteinander fluchtend ausgebildet und angeordnet, so dass das Schneckenelement 45 im Wesentlichen spielfrei auf beiden Teil-Wellen 55, 56 montierbar bzw. positionierbar ist.

Die dem Schneckenelement 45 vorgeordneten Behandlungselemente 39 bis 44 sind mit einem entsprechenden Innenprofil I auf dem Außenprofil A₁ der ersten Teil-Welle 55 drehfest angeordnet. Weiterhin sind die dem Schneckenelement 45 nachgeordneten Schneckenelemente 46 bis 48 mit einem entsprechenden Innenprofil I auf dem Außenprofil A₂ der zweiten Teil-Welle 56 drehfest angeordnet. Vorzugsweise bilden die Außenprofile A₁ und A₂ sowie das jeweilige Innenprofil I der Behandlungselemente 39 bis 48 eine Evolventenverzahnung aus.

Da die höchsten Drehmomente im Bereich der Aufschmelzzone 28 auftreten, erstreckt sich die erste Teil-Welle 55 bzw. die ersten Teil-Wellen 55 über die Aufschmelzzone 28 hinaus, so dass die Knetelemente 41, 41' und auch die Knetelemente 42, 42' auf den ersten Teil-Wellen 55 angeordnet sind.

Die Teil-Wellen 55, 56 sind mittels der Schraubverbindung 57 derart miteinander verbunden, dass die jeweilige Welle 37, 38 spaltfrei bzw. im Wesentlichen spaltfrei ausgebildet ist. Hierzu weist die erste Teil-Welle 55 eine Verbindungsbohrung 58 auf, die an einer stromabwärtigen Stirnseite konzentrisch zu der Drehachse 21 ausgebildet ist. In der Verbindungsbohrung 58 ist ein Innengewinde 59 ausgebildet. Demgegenüber weist die zweite Teil-Welle 56 einen Verbindungszapfen 60 auf, der an einer stromaufwärtigen Stirnseite konzentrisch zu der Drehachse 21 ausgebildet ist. Der Verbindungszapfen 60 weist ein Außengewinde 61 auf, das in das Innengewinde 59 der Verbindungsbohrung 58 einschraubbar ist. Die Schraubverbindung 57 ist derart ausgebildet, dass sich diese im Betrieb der Mehrwellen-Schneckenmaschine 1 bei einer Rotation der Behandlungselementwellen 18, 19 in der jeweiligen Drehrichtung 25, 26 nicht lockert, sondern festigt.

Zur spaltfreien Ausbildung der Wellen 37, 38 liegen die Teil-Wellen 55, 56 im verschraubten Zustand stirnseitig gegeneinander an. Die Behandlungselemente 39 bis 48 bzw. 39' bis 48' sind mit einer axialen Vorspann-Kraft F_{V}, also einer in Richtung der jeweiligen Drehachse 21, 22 wirkenden Vorspann-Kraft F_{V} auf der jeweils zugehörigen Welle 37, 38 angeordnet. Die Behandlungselemente 39 bis 48 bzw. 39' bis 48' werden somit mit der Vorspann-Kraft F_{V} gegeneinander gepresst, wodurch die zugehörige Welle 37 bzw. 38 entsprechend auf Zug belastet wird. In Abhängigkeit der Vorspann-Kraft F_{V} kann hierdurch in axialer Richtung ein geringer Spalt zwischen den Teil-Wellen 55, 56 entstehen. Für die Vorspann-Kraft F_{V} gilt insbesondere: F_{V} ≥ 50 kN, insbesondere F_{V} ≥ 100 kN, und insbesondere F_{V} ≥ 150 kN.

Die Teil-Wellen 56, 57 der Wellen 37, 38 sind in Material, Materialbearbeitung und/oder Länge an die Aufbereitungsaufgabe angepasst und je nach Aufbereitungsaufgabe in diesen Merkmalen gleich und/oder unterschiedlich.

Für das Verhältnis der ersten Länge L₁ zu der zweiten Länge L₂ gilt vorzugsweise: L₁/L₂ > 1, insbesondere L₁/L₂ ≥ 1,5, und insbesondere L₁/L₂ ≥ 2. Die erfindungsgemäßen Vorteile der Mehrwellen-Schneckenmaschine 1 kommen insbesondere bei vergleichsweise langen Wellen 37, 38 und vergleichsweise großen Durchmessern der Behandlungselemente 39 bis 48' zum Tragen. Vorzugsweise weisen die Wellen 37, 38 jeweils eine Gesamtlänge L auf, wobei gilt: L ≥ 6,0 m, insbesondere L ≥ 8,0 m, und insbesondere L ≥ 10,0 m. Weiterhin gilt für einen Durchmesser bzw. InnenDurchmesser D der Gehäusebohrungen 16, 17 vorzugsweise: D ≥ 177 mm, insbesondere D ≥ 248 mm, insbesondere D ≥ 315 mm, und insbesondere D ≥ 352 mm.

Nachfolgend sind die Montage sowie der Betrieb der Mehrwellen-Schneckenmaschine beschrieben:
Zur Herstellung der Behandlungselement-Wellen 18, 19 werden zunächst die Teil-Wellen 55, 56 paarweise miteinander verschraubt. Hierzu werden die zweiten Teil-Wellen 56 mit dem jeweiligen Außengewinde 61 der Verbindungszapfens 60 in das zugehörige Innengewinde 59 der in der zugehörigen ersten Teil-Welle 55 ausgebildeten Verbindungsbohrung 58 eingeschraubt. Die Teil-Wellen 56 werden derart eingeschraubt, dass die Außenprofile A₁ und A₂ miteinander fluchten. Anschließend werden die Behandlungselemente 39 bis 48 bzw. 39' bis 48' mit einer vordefinierten Vorspann-Kraft F_{V} auf den Wellen 37, 38 montiert. Hierzu werden zunächst die Schneckenelemente 39 bzw. 39' bis zu dem jeweiligen ersten Anschlag 49, 49' auf die Wellen 37, 38 aufgeschoben. Anschließend werden sukzessive die weiteren Behandlungselemente 40 bis 48 bzw. 40' bis 48' auf die jeweils zugehörige Welle 37, 38 aufgeschoben. Abschließend wird die Wellenspitze 53, 53' an der jeweils zugehörigen Welle 37, 38 montiert und die Behandlungselemente 39 bis 48 bzw. 39' bis 48' verspannt. Hierzu wird die Wellenspitze 53, 53' mit der stromabwärtigen Stirnseite der zugehörigen zweiten Teil-Welle 56 verschraubt, wodurch die Behandlungselemente 39, 48 bzw. 39' bis 48' zwischen dem jeweils ersten Anschlag 49, 49' und dem zugehörigen zweiten Anschlag 54, 54' verspannt werden. Die jeweilige Verbindungsstelle zwischen den Teil-Wellen 55, 56 ist derart angeordnet, dass das Schneckenelement 45 bzw. 45' auf beiden Teil-Wellen 55, 56 übergreifend angeordnet ist. Die weitere Montage der Mehrwellen-Schneckenmaschine 1 erfolgt in üblicher Weise.

Im Betrieb der Mehrwellen-Schneckenmaschine 1 werden die Behandlungselementwellen 18, 19 in gleichen Drehrichtungen 25, 26 mittels des Antriebsmotors 20 drehangetrieben. Das aufzubereitenden Kunststoffmaterial 2 und Additive 3 werden durch die Materialzuführung 33 in die Gehäusebohrungen 16, 17 eingeführt und in der Einzugszone 27 in der Förderrichtung 5 bis zu der Aufschmelzzone 28 transportiert.

In der Aufschmelzzone 28 wird über die Knetelemente 41, 42 bzw. 41', 42' eine hohe mechanische Energie in das Kunststoffmaterial 2 eingebracht, wodurch dieses aufschmilzt. In der Aufschmelzzone 28, insbesondere im Bereich der Knetelemente 41, 41' wirken dementsprechend die höchsten Drehmomente. Diese Drehmomente werden in üblicher Weise durch die einstückig ausgebildeten Teil-Wellen 55 auf die Knetelemente 41 ,42 bzw. 41', 42' übertragen.

In der anschließenden Entgasungszone 29 wird die Schmelze entgast und zu der Homogenisierzone 30 gefördert, wo eine weitere Homogenisierung der Schmelze sowie der darin enthaltenen Additive 3 stattfindet.

In der darauffolgenden Förderzone 31 erfolgt eine weitere Homogenisierung und eine Förderung in Richtung der Druckaufbauzone 32. Dadurch, dass die Schneckenelemente 45, 45' übergreifend auf den jeweils beiden Teil-Wellen 55, 56 angeordnet sind, erfolgt im Bereich der Verbindungsstellen eine zuverlässige Drehmomentübertragung. In der Druckaufbauzone 32 wird der Schmelzedruck erhöht und die Schmelze anschließend durch die Austragsöffnung 36 ausgetragen.

Im Betrieb der Mehrwellen-Schneckenmaschine 1 dehnen sich die Wellen 37, 38 aufgrund einer Erwärmung in axialer Richtung aus. Dadurch, dass die Behandlungselemente 39 bis 48 bzw. 39' bis 48' in axialer Richtung aufgrund der Vorspann-Kraft F_{V} gegeneinander vorgespannt sind, ist gewährleistet, dass die auf den Wellen 37, 38 verspannten Behandlungselemente 39 bis 48 bzw. 39' bis 48' aufgrund der axialen Ausdehnung der Wellen 37, 38 sich in axialer Richtung nicht lockern.

Dadurch, dass die Wellen 37, 38 aus jeweils zwei Teil-Wellen 55, 56 aufgebaut sind, können die Teil-Wellen 55, 56 hinsichtlich Material, Materialbearbeitung und/oder Länge optimal an die Aufbereitungsaufgabe angepasst werden. Hierdurch können Material, Materialbearbeitung und Länge der Teil-Wellen 55, 56 je nach Bedarf gleich und/oder unterschiedlich gewählt werden, wodurch die Herstellungskosten bei gleichbleibender Funktionalität und Zuverlässigkeit reduziert werden können.

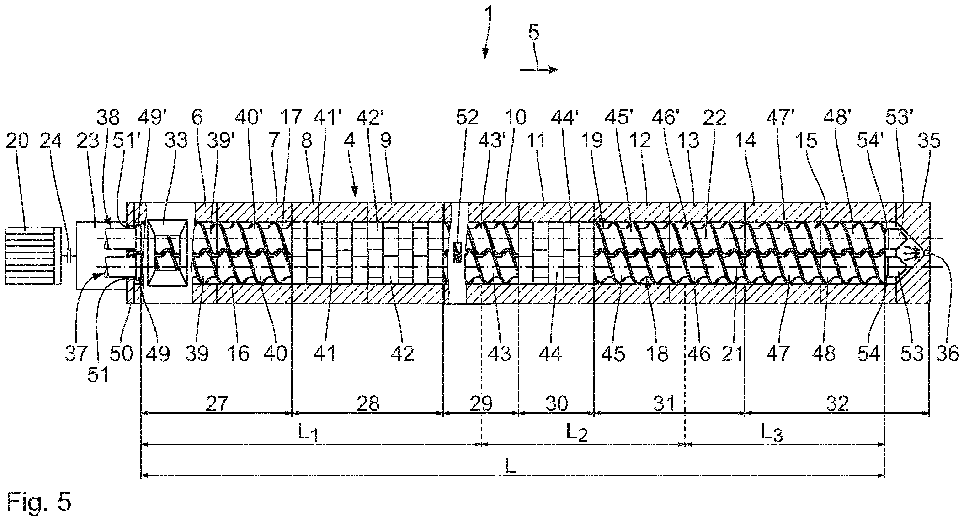

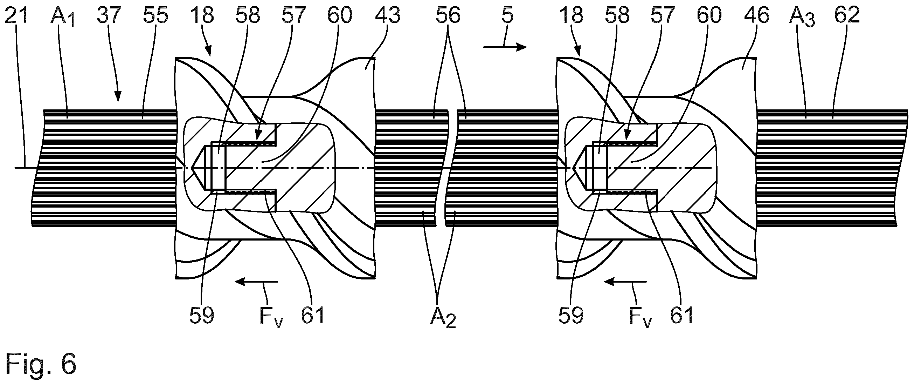

Nachfolgend ist anhand der Fig. 5 und 6 ein zweites Ausführungsbeispiel der Erfindung beschrieben. Im Unterschied zu dem ersten Ausführungsbeispiel sind die Wellen 37, 38 aus jeweils drei miteinander verbundenen Teil-Wellen 55, 56 und 62 aufgebaut. Die ersten Teil-Wellen 55 erstrecken sich bis in die Entgasungszone 29, so dass die Schneckenelemente 43, 43' übergreifend auf den ersten Teil-Wellen 55 und den jeweils damit verbundenen zweiten Teil-Wellen 56 angeordnet sind. Hierzu sind die Außenprofile A₁ und A₂ der Teil-Wellen 55, 56 in der beschriebenen Weise zueinander ausgerichtet. Die Schraubverbindung 57 ist entsprechend dem ersten Ausführungsbeispiel ausgebildet.

Die dritten Teil-Wellen 62 weisen jeweils ein Außenprofil A₃ auf, das im verbundnen Zustand der Teil-Wellen 56, 62 mit dem jeweiligen Außenprofil A₂ fluchtend ausgerichtet ist. Die zweiten Teil-Wellen 56 erstrecken sich bis in die Förderzone 31, so dass die Schneckenelemente 46, 46' übergreifend auf den jeweils verbundenen Teil-Wellen 56, 62 angeordnet sind. Die Teil-Wellen 56, 62 sind mittels Schraubverbindungen 57 miteinander verbunden, die entsprechend den Schraubverbindungen 57 der Teil-Wellen 55, 56 ausgebildet sind.

Die dritten Teil-Wellen 62 weisen in Richtung der Drehachsen 21, 22 eine Länge L₃ auf, die vorzugsweise gleich der Länge L₂ der zweiten Teil-Wellen 56 ist. Die Länge L₁ ist vorzugsweise größer als die jeweilige Länge L₂ und L₃, so dass sich die ersten Teil-Wellen 55 über die Aufschmelzzone 28 hinaus erstrecken, so dass insbesondere die Knetelemente 41, 41' auf den ersten Teil-Wellen 55 angeordnet sind.

Hinsichtlich der Montage der Behandlungselementwellen 18, 19 und des Betriebs der Mehrwellen-Schneckenmaschine 1 wird auf die Ausführungen zu dem ersten Ausführungsbeispiel verwiesen.

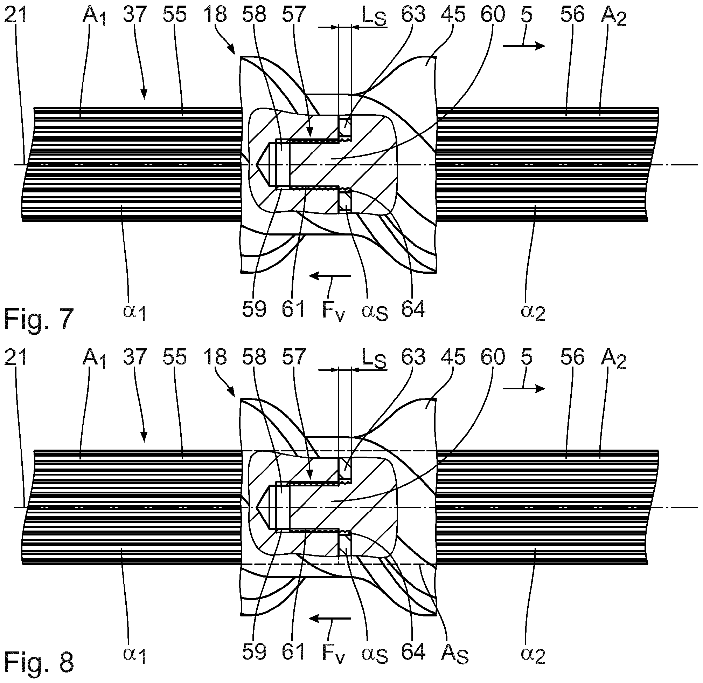

Nachfolgend ist anhand von Fig. 7 ein drittes Ausführungsbeispiel der Erfindung beschrieben. Im Unterschied zu den vorangegangenen Ausführungsbeispiel ist zwischen den verbundenen Teil-Wellen 55, 56 jeweils eine ringförmige Scheibe 63 angeordnet. Der Verbindungszapfen 60 der jeweiligen zweiten Teil-Welle 56 ist durch eine Durchführöffnung 64 der Scheibe 63 geführt, so dass die Scheibe 63 im verbundenen Zustand der Teil-Wellen 55, 56 gegen die Stirnseiten der Teil-Wellen 55, 56 anliegt. Die Behandlungselemente 39 bis 48 bzw. 39' bis 48' sind entsprechend den vorangegangenen Ausführungsbeispielen mittels einer Vorspann-Kraft F_{V} vorgespannt. In Abhängigkeit der Vorspann-Kraft F_{V} kann zwischen der Scheibe 63 und einer der benachbarten Teil-Wellen 55, 56 bzw. den benachbarten Teil-Wellen 55, 56 ein geringer Spalt entstehen. Die Scheibe 63 weist in axialer Richtung einen Wärmeausdehnungskoeffizienten α_{S} auf, der größer als mindestens einer der Wärmeausdehnungskoeffizienten α₁ der ersten Teil-Welle 55 und des Wärmeausdehnungskoeffizienten α₂ der zweiten Teil-Welle 56 ist. Vorzugsweise ist der Wärmeausdehnungskoeffizient α_{S} größer als beide Wärmeausdehnungskoeffizienten α₁ und α₂. Die Scheibe 63 ist im Wesentlichen konzentrisch zu der zugehörigen Drehachse 21 bzw. 22 angeordnet und weist einen Durchmesser auf, der kleiner als der durch die Außenprofile A₁ und A₂ vorgegebene Wellen-Durchmesser der jeweiligen Welle 37, 38 ist.

Für ein Verhältnis des Wärmeausdehnungskoeffizienten α_{S} zu mindestens einem der Wärmeausdehnungskoeffizienten αᵢ mit i = 1 oder 2 gilt: α_{S}/αᵢ ≥ 1,5, insbesondere α_{S}/αᵢ ≥ 2, und insbesondere α_{S}/αᵢ ≥ 2,5. Vorzugsweise gilt das obige Verhältnis für α_{S}/αᵢ mit i = 1 und 2.

Für den Wärmeausdehnungskoeffizienten α_{S} gilt vorzugsweise: α_{S} ≥ 12,0·10⁻⁶ 1/K, insbesondere α_{S} ≥ 15,0·10⁻⁶ 1/K, und insbesondere α_{S} ≥ 18,0·10⁻⁶ 1/K.

Die Scheibe 83 weist in Richtung der jeweiligen Drehachse 21, 22 eine Abmessung L_{S} auf, wobei für die Abmessung L_{S} vorzugsweise gilt: 5 mm ≤ L_{S} ≤ 50 mm, insbesondere 10 mm ≤ L_{S} ≤ 40 mm, und insbesondere 15 mm ≤ L_{S} ≤ 30 mm.

Die jeweilige Scheibe 83 wird vor dem Verschrauben der Teil-Wellen 55, 56 zwischen diesen angeordnet. Dadurch, dass der Wärmeausdehnungskoeffizient α_{S} größer als mindestens einer der Wärmeausdehnungskoeffizienten α₁ bzw. α₂, vorzugsweise größer als beide Wärmeausdehnungskoeffizienten α₁ und α₂ ist, bleibt die jeweilige Welle 37, 38 auch bei einer axialen Ausdehnung infolge einer Erwärmung im Betrieb der Mehrwellen-Schneckenmaschine 1 spaltfrei bzw. wird ein etwaiger Spalt zwischen der Scheibe 63 und einer der Teil-Wellen 55, 56 bzw. den Teil-Wellen 55, 56 aufgrund der vergleichsweise größeren Ausdehnung der Scheibe 63 in axialer Richtung geschlossen, wodurch die jeweilige Welle 37, 38 spaltfrei wird. Die Wellen 37, 38 sind somit in einem erwärmten Betriebszustand spaltfrei ausgebildet, so dass eine zuverlässige Drehmomentübertragung sowie eine sichere axiale Fixierung der Behandlungselemente 39 bis 48 bzw. 39' bis 48' zwischen den Anschlägen 49 und 54 bzw. 49' und 54' gewährleitstet ist. Im erwärmten Betriebszustand weisen die Wellen 37, 38 eine Temperatur von mindestens 100°C, insbesondere von mindestens 150°C, und insbesondere von mindestens 200°C auf.

Sind die Wellen 37, 38 entsprechend dem zweiten Ausführungsbeispiel aus drei Teil-Wellen 55, 56 und 62 aufgebaut, so ist zwischen den jeweils verbundenen Teil-Wellen 55, 56 sowie 56 und 62 eine Scheibe 63 angeordnet, deren Wärmeausdehnungskoeffizient α_{S} größer als der Wärmeausdehnungskoeffizient α₁ oder α₂ bzw. α₂ oder α₃ einer der benachbarten Teil-Wellen 55, 56 bzw. 56, 62 ist. Vorzugsweise sind die Scheiben 63 identisch ausgebildet. Für Wellen 37, 38 mit drei Teil-Wellen 55, 56, 62 erfolgt die Bezeichnung der Wärmeausdehnungskoeffizienten mit αᵢ mit i = 1, 2, 3. Hinsichtlich der weiteren Montage der Behandlungselementwellen 18, 19 und dem Betrieb der Mehrwellen-Schneckenmaschine 1 wird auf die Beschreibung der vorangegangenen Ausführungsbeispiele verwiesen.

Nachfolgend ist anhand von Fig. 8 ein viertes Ausführungsbeispiel beschrieben. Im Unterschied zu den vorangegangenen Ausführungsbeispielen weist die jeweilige zwischen den Teil-Wellen 55, 56 angeordnete Scheibe 63 ein Scheiben-Außenprofil A_{S} auf, das entsprechend den Außenprofilen A₁ und A₂ ausgebildet und ausgerichtet ist. Das jeweilige Schneckenelement 45, 45' ist mit seinem Innenprofil I somit auf den Außenprofilen A₁, A_{S} und A₂ übergreifend angeordnet. Das jeweilige Schneckenelement 45, 45' ist somit drehfest mit den Teil-Wellen 55, 56 und der dazwischen angeordneten Scheibe 63 verbunden. Hierdurch wird eine zuverlässige Drehmomentübertragung gewährleistet. Sind die Wellen 37, 38 aus drei Teil-Wellen 55, 56 und 62 ausgebildet, so gelten die Ausführungen zu dem dritten Ausführungsbeispiel für die profilierte Scheiben 63 bzw. die profilierten Scheiben entsprechend.

Hinsichtlich der weiteren Montage der Behandlungselementwellen 18, 19 sowie des weiteren Betriebs der Mehrwellen-Schneckenmaschine 1 wird auf die vorangegangenen Ausführungsbeispiele verwiesen.

## Patentansprüche

1. Mehrwellen-Schneckenmaschine zur Aufbereitung von Materialien, insbesondere von Kunststoffmaterialien, mit
- einem Gehäuse (4),
- mindestens zwei in dem Gehäuse (4) ausgebildeten Gehäusebohrungen (16, 17),
- mindestens zwei Behandlungselementwellen (18, 19),
-- die in der jeweils zugehörigen Gehäusebohrung (16, 17) angeordnet und um eine jeweils zugehörige Drehachse (21, 22) drehantreibbar sind, und
-- die zur Behandlung eines aufzubereitenden Materials (2, 3) mehrere Behandlungselemente (39 bis 48, 39' bis 48') aufweisen, die in Richtung der jeweiligen Drehachse (21, 22) nacheinander auf mindestens zwei zugehörigen Wellen (37, 38) drehfest angeordnet sind, wobei
die mindestens zwei Wellen (37, 38) jeweils eine erste Teil-Welle (55) und mindestens eine in der Förderrichtung (5) nachgeordnete zweite Teil-Welle (56; 56, 62) umfassen,
die Teil-Wellen (55, 56; 55, 56, 62) zur Ausbildung der jeweiligen Welle (37, 38) mittels einer Schraubverbindung (57) miteinander verbunden sind, und auf jeder der Wellen (37, 38) ein Behandlungselement (45, 45'; 43, 43', 46, 46') drehfest und übergreifend auf den verbundenen Teil-Wellen (55, 56; 55, 56, 62) angeordnet ist,
**dadurch gekennzeichnet,**
**dass** die ersten Teil-Wellen (55) sich jeweils mindestens bis in eine Aufschmelzzone (28) erstrecken und mindestens ein Knetelement (41, 41') drehfest auf jeder der ersten Teil-Wellen (55) angeordnet ist.

2. Mehrwellen-Schneckenmaschine nach Anspruch 1, **dadurch gekennzeichnet,**
**dass** die verbundenen Teil-Wellen (55, 56; 55, 56, 62) jeweils ein Außenprofil (A₁, A₂; A₁, A₂, A₃) aufweisen,
**dass** die Außerprofile (A₁, A₂; A₁, A₂, A₃) der verbundenen Teil-Wellen (55, 56) derart zueinander ausgerichtet sind, dass das übergreifende Behandlungselement (45, 45'; 43, 43', 46, 46') mit einem Innenprofil (I) drehfest auf beiden Außenprofilen (A₁, A₂; A₁, A₂, A₃) angeordnet ist.

3. Mehrwellen-Schneckenmaschine nach Anspruch 2, **dadurch gekennzeichnet,**
**dass** die Außenprofile (A₁, A₂; A₁, A₂, A₃) und das zugehörige Innenprofil (I) eine Evolventenverzahnung bilden.

4. Mehrwellen-Schneckenmaschine nach einem der Ansprüche 1 bis 3,
**dadurch gekennzeichnet,**
**dass** die Teil-Wellen (55, 56; 55, 56, 62) der jeweiligen Welle (37, 38) in mindestens einem der Merkmale Material, Materialbearbeitung und Länge unterschiedlich sind.

5. Mehrwellen-Schneckenmaschine nach einem der Ansprüche 1 bis 4,
**dadurch gekennzeichnet,**
**dass** die Teil-Wellen (55, 56; 55, 56, 62) der jeweiligen Welle (37, 38) mittels einer Schraubverbindung (57) miteinander verbunden sind und die jeweilige Welle (37, 38) insbesondere spaltfrei ausgebildet ist.

6. Mehrwellen-Schneckenmaschine nach einem der Ansprüche 1 bis 5,
**dadurch gekennzeichnet,**
**dass** die Behandlungselemente (39 bis 48, 39' bis 48') mit einer Vorspann-Kraft F_{V} in Richtung der jeweiligen Drehachse (21, 22) auf der jeweiligen Teil-Welle (55, 56; 55, 56, 62) angeordnet ist, wobei insbesondere gilt: F_{V} ≥ 50 kN, insbesondere F_{V} ≥ 100 kN, und insbesondere F_{V} ≥ 150 kN.

7. Mehrwellen-Schneckenmaschine nach einem der Ansprüche 1 bis 6,
**dadurch gekennzeichnet,**
**dass** die ersten Teil-Wellen (55) jeweils eine erste Länge L₁ und die zweiten Teil-Wellen (56) jeweils eine zweite Länge L₂ in Richtung der Drehachsen (21, 22) aufweisen, wobei gilt: L₁/L₂ > 1, insbesondere L₁/L₂ ≥ 1,5, und insbesondere L₁/L₂ ≥ 2.

8. Mehrwellen-Schneckenmaschine nach einem der Ansprüche 1 bis 7,
**dadurch gekennzeichnet,**
**dass** die Wellen (37, 38) jeweils eine Gesamtlänge L aufweisen, wobei gilt: L ≥ 6,0 m, insbesondere L ≥ 8,0 m, und insbesondere L ≥ 10,0 m.

9. Mehrwellen-Schneckenmaschine nach einem der Ansprüche 1 bis 8,
**dadurch gekennzeichnet,**
**dass** die Gehäusebohrungen (16, 17) jeweils einen Durchmesser D aufweisen, wobei gilt: D ≥ 177 mm, insbesondere D ≥ 248 mm, insbesondere D ≥ 315 mm, und insbesondere D ≥ 352 mm.

10. Mehrwellen-Schneckenmaschine nach einem der Ansprüche 1 bis 9,
**dadurch gekennzeichnet,**
**dass** zwischen verbundenen Teil-Wellen (55, 56; 55, 56, 62) jeweils eine ringförmige Scheibe (63) angeordnet ist und die jeweilige Scheibe (63) einen Wärmeausdehnungskoeffizienten α_{S} aufweist, der größer als ein Wärmeausdehnungskoeffizient αᵢ mindestens einer der benachbarten Teil-Wellen (55, 56; 55, 56, 62) ist.

11. Mehrwellen-Schneckenmaschine nach Anspruch 10, **dadurch gekennzeichnet,**
**dass** für ein Verhältnis des Wärmeausdehnungskoeffizienten α_{S} zu dem Wärmeausdehnungskoeffizienten αᵢ mindestens einer der benachbarten Teil-Wellen (55, 56; 55, 56, 62) gilt: α_{S}/αᵢ ≥ 1,5, insbesondere α_{S}/αᵢ ≥ 2, und insbesondere α_{S}/αᵢ ≥ 2,5.

12. Mehrwellen-Schneckenmaschine nach Anspruch 10 oder 11, **dadurch gekennzeichnet,**
**dass** die jeweilige Scheibe (63) in Richtung der Drehachsen (21, 22) eine Abmessung L_{S} aufweist und gilt: 5 mm ≤ L_{S} ≤ 50 mm, insbesondere 10 mm ≤ L_{S} ≤ 40 mm, und insbesondere 15 mm ≤ L_{S} ≤ 30 mm.

13. Mehrwellen-Schneckenmaschine nach einem der Ansprüche 10 bis 12,
**dadurch gekennzeichnet,**
**dass** für den Wärmeausdehnungskoeffizienten α_{S} gilt: α_{S} ≥ 12,0·10⁻⁶ 1/K, insbesondere α_{S} ≥ 15,0·10⁻⁶ 1/K, und insbesondere α_{S} ≥ 18,0·10⁻⁶ 1/K.

14. Mehrwellen-Schneckenmaschine nach einem der Ansprüche 10 bis 13,
**dadurch gekennzeichnet,**
**dass** die jeweilige Scheibe (63) ein den benachbarten Teil-Wellen (55, 56; 55, 56, 62) entsprechendes Scheiben-Außenprofil (A_{S}) aufweist und das auf den benachbarten Teil-Wellen (55, 56; 55, 56, 62) übergreifend angeordnete Behandlungselement (45, 45'; 43, 43', 46, 46') drehfest mit der jeweiligen Scheibe (63) verbunden ist.

## Claims

1. Multiple-shaft screw machine for the processing of materials, in particular of plastic materials, comprising
- a casing (4);
- at least two casing bores (16, 17) formed in the casing (4);
- at least two treatment element shafts (18, 19) which
-- are arranged in the associated casing bore (16, 17) and are drivable for rotation about an associated axis of rotation (21, 22); and
-- are provided with a number of treatment elements (39 to 48, 39' to 48') for the treatment of a material (2, 3) to be processed which are non-rotationally arranged one behind the other on at least two associated shafts (37, 38) in the direction of the respective axis of rotation (21, 22), wherein
the at least two shafts (37, 38) in each case comprise a first partial shaft (55) and at least one second partial shaft (56; 56, 62) arranged downstream thereof in the direction of conveyance (5),
the partial shafts (55, 56; 55, 56, 62) are interconnected, by means of a screw connection (57), to form the respective shaft (37, 38); and
each of the shafts (37, 38) is provided with a treatment element (45, 45'; 43, 43', 46, 46') which is non-rotationally arranged in such a way as to overlap the interconnected partial shafts (55, 56; 55, 56, 62),
**characterized in**
**that** the first partial shafts (55) extend in each case at least up to a melting zone (28) and at least one kneading element (41, 41') is non-rotationally arranged on each of the first partial shafts (55).

2. Multiple-shaft screw machine according to claim 1, **characterized in that** the interconnected partial shafts (55, 56; 55, 56, 62) each comprise an outer profile (A₁, A₂; A₁, A₂, A₃);
**that** the outer profiles (A₁, A₂; A₁, A₂, A₃) of the interconnected partial shafts (55, 56) are aligned relative to each other in such a way that an inner profile (I) of the overlapping treatment element (45, 45'; 43, 43', 46, 46') is non-rotationally arranged on both outer profiles (A₁, A₂; A₁, A₂, A₃).

3. Multiple-shaft screw machine according to claim 2, **characterized in that** the outer profiles (A₁, A₂; A₁, A₂, A₃) and the associated inner profile (I) form an involute gearing.

4. Multiple-shaft screw machine according to one of claims 1 to 3, **characterized in**
**that** the partial shafts (55, 56, 55, 56, 62) of the respective shaft (37, 38) differ in at least one of the features material, material processing and length.

5. Multiple-shaft screw machine according to one of claims 1 to 4, **characterized in**
**that** the partial shafts (55, 56; 55, 56, 62) of the respective shaft (37, 38) are interconnected by means of a screw connection (57) and the respective shaft (37, 38) is in particular gapless.

6. Multiple-shaft screw machine according to one of claims 1 to 5, **characterized in**
**that** the treatment elements (39 to 48, 39' to 48') are arranged on the respective partial shaft (55, 56; 55, 56, 62) with a preloading force Fv in the direction of the respective axis of rotation (21, 22), wherein in particular F_{V} ≥ 50 kN, in particular F_{V} ≥ 100 kN, and in particular F_{V} ≥ 150 kN.

7. Multiple-shaft screw machine according to one of claims 1 to 6, **characterized in**
**that** the first partial shafts (55) each have a first length L₁ while the second partial shafts (56) each have a second length L₂ in the direction of the axes of rotation (21, 22), wherein L₁/L₂ > 1, in particular L₁/L₂ ≥ 1.5, and in particular L₁/L₂ ≥ 2.

8. Multiple-shaft screw machine according to one of claims 1 to 7, **characterized in**
**that** the shafts (37, 38) each have a total length L, wherein L ≥ 6.0 m, in particular L ≥ 8.0 m, and in particular L ≥ 10.0 m.

9. Multiple-shaft screw machine according to one of claims 1 to 8, **characterized in**
**that** the casing bores (16, 17) each have a diameter D, wherein D ≥ 177 mm, in particular D ≥ 248 mm, in particular D ≥ 315 mm, and in particular D ≥ 352 mm.

10. Multiple-shaft screw machine according to one of claims 1 to 9, **characterized in**
**that** an annular washer (63) is in each case arranged between interconnected partial shafts (55, 56; 55, 56, 62), and the respective washer (63) has a coefficient of thermal expansion α_{S} which is greater than a coefficient of thermal expansion αᵢ of at least one of the adjacent partial shafts (55, 56; 55, 56, 62).

11. Multiple-shaft screw machine according to claim 10, **characterized in that** a ratio of the coefficient of thermal expansion α_{S} to the coefficient of thermal expansion αᵢ of at least one of the adjacent partial shafts (55, 56; 55, 56, 62) is such that α_{S}/αᵢ ≥ 1.5, in particular α_{S}/αᵢ ≥ 2, and in particular α_{S}/αᵢ ≥ 2.5.

12. Multiple-shaft screw machine according to claim 10 or 11, **characterized in**
**that** the respective washer (63) has a dimension L_{S} in the direction of the axes of rotation (21, 22) to which applies: 5 mm ≤ L_{S} ≤ 50 mm, in particular 10 mm ≤ L_{S} ≤ 40 mm, and in particular 15 mm ≤ L_{S} ≤ 30 mm.

13. Multiple-shaft screw machine according to one of claims 10 to 12, **characterized in**
**that** the coefficient of thermal expansion α_{S} is such that α_{S} ≥ 12.0·10⁻⁶ 1/K, in particular α_{S} ≥ 15.0·10⁻⁶ 1/K, and in particular α_{S} ≥ 18.0·10⁻⁶1/K.

14. Multiple-shaft screw machine according to one of claims 10 to 13, **characterized in**
**that** the respective washer (63) has an outer washer profile (As) corresponding to the adjacent partial shafts (55, 56; 55, 56, 62), and the treatment element (45, 45'; 43, 43', 46, 46') arranged in such a way as to overlap the adjacent partial shafts (55, 56; 55, 56, 62) is non-rotationally connected to the respective washer (63).

## Revendications

1. Machine à vis sans fin à plusieurs arbres destinée à la préparation de matériaux, en particulier de matériaux en matière synthétique, avec
- un carter (4),
- au moins deux alésages de carter (16, 17) constitués dans le carter (4),
- au moins deux arbres d'élément de traitement (18, 19),
-- qui sont disposés dans l'alésage de carter (16, 17) respectivement correspondant et qui peuvent être entraînés en rotation autour d'un axe de rotation (21, 22) respectivement correspondant, et
-- qui, pour le traitement d'un matériau (2, 3) à préparer, comportent plusieurs éléments de traitement (39 à 48, 39' à 48') qui sont disposés, bloqués en rotation, les uns derrière les autres en direction de l'axe de rotation (21, 22) sur au moins deux arbres (37, 38) correspondants,
dans laquelle les au moins deux arbres (37, 38) comprennent respectivement un premier arbre partiel (55) et au moins un deuxième arbre partiel (56 ; 56, 62) placé en aval dans la direction de transport (5),
dans laquelle les arbres partiels (55, 56 ; 55, 56, 62) sont raccordés les uns aux autres au moyen d'un assemblage vissé (57) pour la constitution de l'arbre (37, 38) respectif, et
dans laquelle un élément de traitement (45, 45' ; 43, 43', 46, 46') est disposé bloqué en rotation sur chacun des arbres (37, 38) et en englobant les arbres partiels (55, 56 ; 55, 56, 62) raccordés,
**caractérisée en ce que**
les premiers arbres partiels (55) s'étendent respectivement au moins jusque dans une zone de fusion (28), et au moins un élément de malaxage (41, 41') est disposé bloqué en rotation sur chacun des premiers arbres partiels (55).

2. Machine à vis sans fin à plusieurs arbres selon la revendication 1, **caractérisée en ce que**
les arbres partiels (55, 56 ; 55, 56, 62) raccordés comportent respectivement un profilé extérieur (A₁, A₂ ; A₁, A₂, A₃),
**en ce que** les profilés extérieurs (A₁, A₂ ; A₁, A₂, A₃) des arbres partiels (55, 56) raccordés sont orientés les uns par rapport aux autres de telle sorte que l'élément de traitement (45, 45' ; 43, 43', 46, 46') englobant est disposé de façon bloquée en rotation avec un profilé intérieur (I) sur les deux profilés extérieurs (A₁, A₂ ; A₁, A₂, A₃).

3. Machine à vis sans fin à plusieurs arbres selon la revendication 2, **caractérisée en ce que**
les profilés extérieurs (A₁, A₂ ; A₁, A₂, A₃) et le profilé intérieur (I) correspondant forment une denture à développante.

4. Machine à vis sans fin à plusieurs arbres selon l'une des revendications 1 à 3, **caractérisée en ce que**
les arbres partiels (55, 56 ; 55, 56, 62) de l'arbre (37, 38) respectif se distinguent par au moins une caractéristique parmi le matériau, le traitement du matériau et la longueur.

5. Machine à vis sans fin à plusieurs arbres selon l'une des revendications 1 à 4, **caractérisée en ce que**
les arbres partiels (55, 56 ; 55, 56, 62) de l'arbre (37, 38) respectif sont raccordés les uns aux autres au moyen d'un assemblage vissé (57), et l'arbre (37, 38) respectif est en particulier constitué sans interstice.

6. Machine à vis sans fin à plusieurs arbres selon l'une des revendications 1 à 5, **caractérisée en ce que**
les éléments de traitement (39 à 48, 39' à 48') sont disposés avec une force de pré-tension Fv en direction de l'axe de rotation (21, 22) respectif sur l'arbre partiel (55, 56 ; 55, 56, 62) respectif, où en particulier F_{V} ≥ 50 kN, en particulier F_{V} ≥ 100 kN et en particulier F_{V} ≥ 150 kN,

7. Machine à vis sans fin à plusieurs arbres selon l'une des revendications 1 à 6, **caractérisée en ce que**
les premiers arbres partiels (55) présentent respectivement une première longueur L₁, et les deuxièmes arbres partiels (56) présentent respectivement une deuxième longueur L₂ en direction des axes de rotation (21, 22), où L₁/L₂ ≥ 1, en particulier L₁/L₂ ≥ 1,5, et en particulier L₁/L₂ ≥ 2.

8. Machine à vis sans fin à plusieurs arbres selon l'une des revendications 1 à 7, **caractérisée en ce que**
les arbres (37, 38) présentent respectivement une longueur totale L, où L ≥ 6,0 m, en particulier L ≥ 8,0 m, et en particulier L ≥ 10,0 m.

9. Machine à vis sans fin à plusieurs arbres selon l'une des revendications 1 à 8, **caractérisée en ce que**
les alésages de carter (16, 17) présentent respectivement un diamètre D, où D ≥ 177 mm, en particulier D ≥ 248 mm, en particulier D ≥ 315 mm, et en particulier D ≥ 352 mm.

10. Machine à vis sans fin à plusieurs arbres selon l'une des revendications 1 à 9, **caractérisée en ce que**,
respectivement un disque (63) de forme annulaire est disposé entre des arbres partiels (55, 56 ; 55, 56, 62), et le disque (63) respectif présente un coefficient de dilatation thermique α_{S} qui est supérieur à un coefficient de dilatation thermique αᵢ d'au moins un des arbres partiels (55, 56 ; 55, 56, 62) voisins.

11. Machine à vis sans fin à plusieurs arbres selon la revendication 10, **caractérisée en ce que**,
pour un rapport du coefficient de dilatation thermique α_{S} au coefficient de dilatation thermique αᵢ d'au moins un des arbres partiels (55, 56 ; 55, 56, 62) voisins, on a α_{S}/αᵢ ≥ 1,5, en particulier α_{S}/αᵢ ≥ 2, et en particulier α_{S}/αᵢ ≥ 2,5.

12. Machine à vis sans fin à plusieurs arbres selon la revendication 10 ou 11, **caractérisée en ce que**,
dans la direction des axes de rotation (21, 22), le disque (63) respectif présente une dimension L_{S}, et où 5 mm ≤ L_{S} ≤ 50 mm, en particulier 10 mm ≤ L_{S} ≤ 40 mm, et en particulier 15 mm ≤ L_{S} ≤ 30 mm.

13. Machine à vis sans fin à plusieurs arbres selon l'une des revendications 10 à 12, **caractérisée en ce que**,
pour le coefficient de dilatation thermique as, on a : α_{S} ≥ 12,0·10⁻⁶ l/K, en particulier α_{S} ≥ 15,0·10⁻⁶ l/K, et en particulier α_{S} ≥ 18,0·10⁻¹ l/K.

14. Machine à vis sans fin à plusieurs arbres selon l'une des revendications 10 à 13, **caractérisée en ce que**
le disque (63) respectif comporte un profilé extérieur de disque (As) correspondant aux arbres partiels (55, 56 ; 55, 56, 62) voisins, et l'élément de traitement (45, 45' ; 43, 43', 46, 46') disposé de façon englobante sur les arbres partiels (55, 56 ; 55, 56, 62) voisins est raccordé de façon bloquée en rotation avec le disque (63) respectif.
